(19) Europäisches Patentamt

European Patent Office

Office européen des brevets

(11) **EP 0 762 713 A1**

(12) **EUROPÄISCHE PATENTANMELDUNG**

(43) Veröffentlichungstag:
**12.03.1997 Patentblatt 1997/11**

(51) Int. Cl.⁶: **H04M 3/30**, G01R 27/26,
G01R 27/20

(21) Anmeldenummer: 95114062.3

(22) Anmeldetag: **07.09.1995**

(84) Benannte Vertragsstaaten:
**AT BE CH DE DK ES FR GB GR IE IT LI LU MC NL PT SE**

(71) Anmelder: **SIEMENS AKTIENGESELLSCHAFT**
**80333 München (DE)**

(72) Erfinder:
- **Heink, Matthias, Dipl.-Phys.**
  **D-81371 München (DE)**
- **Schmutzler, Werner**
  **D-82256 Fürstenfeldbruck (DE)**
- **Kaiser, Wolfgang, Dipl.-Ing. (FH)**
  **D-83395 Freilassing (DE)**

(54) **Schaltungsanordnung zum Prüfen von Teilnehmerleitungen**

(57) Schaltungsanordnung zum Prüfen von Teilnehmerleitungen sollten möglichst einfach aufgebaut sein. Die Erfindung erreicht dieses Ziel durch den Einsatz eines neuen Meßverfahrens zur Ermittlung der (Telefon-)Kapazität.

FIG 1

EP 0 762 713 A1

**Beschreibung**

Bei Fiber in the Loop (FITL) Systemen besteht die Forderung, daß der Hardware-Aufwand und damit die Kosten in den, durch Glasfaser abgesetzten Einheiten (ONU's) möglichst niedrig gehalten werden, da diese Einheiten nur wenige Teilnehmeranschlüsse versorgen. Dies gilt auch für die Einrichtungen zum Prüfen von Teilnehmerleitungen. Sie müssen wegen der Notwendigkeit eines galvanischen Zugriffes auf die Teilnehmerleitung in jeder ONU vorhanden sein.

Bisher wurden für die Ermittlung von Fremdspannung, Kapazität, Isolationswiderstand und Schleifenindikation an der Teilnehmerleitung getrennte Meßkreise verwendet.

Der Schaltungsaufwand für die Prüfschaltung ist dadurch erheblich.

Der Erfindung liegt die Aufgabe zugrunde, eine Schaltungsanordnung zum Prüfen von Teilnehmerleitungen anzugeben, die wesentlich einfacher aufgebaut ist.

Diese Aufgabe wird durch eine Schaltungsanordnung gemäß Anspruch 1 gelöst.

Durch Einsatz eines neuen Meßverfahrens zur Ermittlung der (Telefon-)Kapazität kann für die Meßwertaufnahme bei der Kapazitätsermittlung und bei der (Isolations-)Widerstandsermittlung dieselbe Spannungsmeßschaltung verwendet werden.

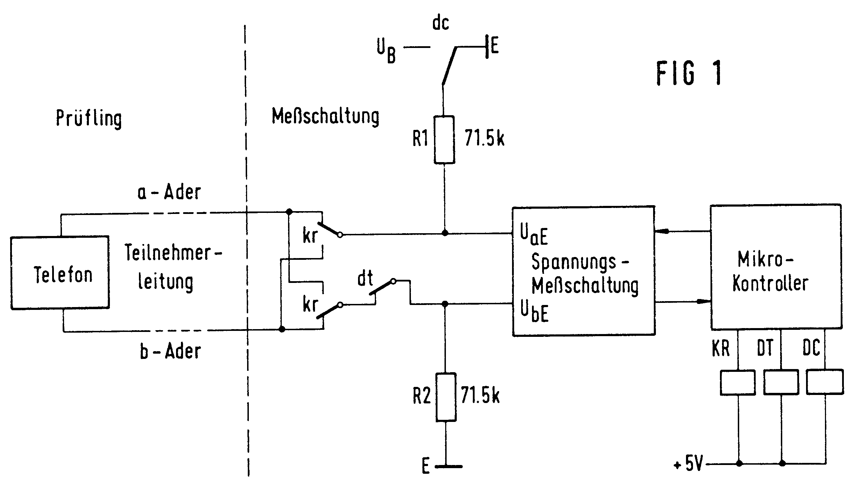

FIG 1 zeigt die erfindungsgemäße Schaltungsanordnung zum Prüfen von Teilnehmerleitungen. Die Schaltungsanordnung besteht aus folgenden Elementen:

a) einem Relais KR mit zugehörigen Schaltern kr zum Umschalten der Widerstandsmessung von a-Ader gegen Erde nach b-Ader gegen Erde,
b) einem Relais DT mit zugehörigem Schalter dt zum Abschalten der zweiten Ader bei Widerstandsmessung einer Ader gegen Erde,
c) einem Relais DC mit zugehörigem Schalter dc zum Umschalten von (Kapazität-)Laden auf (Kapazität-)Entladen bei der Kapazitätsmessung,
d) Meßwiderständen R1 und R2,
e) einer Spannungsmeßschaltung bestehend aus den Komponenten: Meßverstärker zum Abgreifen der Spannung an den ab-Adern, Analogmultiplexer und A/D-Umsetzer,
f) Mikrokontroller MC zum Steuern der Schaltungsanordnung und zur Ermittlung der Kenngrößen der Teilnehmerleitung aus den durch die Spannungsmeßschaltung abgegriffenen Spannungen.

Für den automatischen Abgleich der Offsets von A/D-Umsetzer und Meßverstärker werden im Ruhezustand der Schaltung die Offsetspannungen ermittelt und später durch den MC von jedem Meßwert subtrahiert.

Im folgenden werden die mit der Schaltungsanordnung realisierbaren Prüfungen näher erläutert.

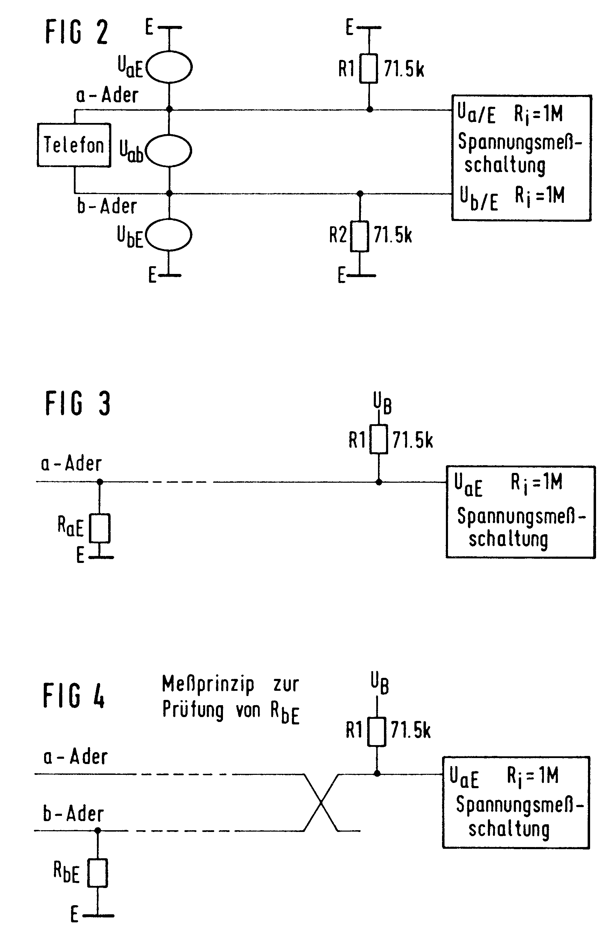

FIG 2 zeigt die Konfiguration der Schaltungsanordnung zur Durchführung der Fremdspannungsmessung

Die Messung erfolgt zwischen a-Ader und Erde und zwischen b-Ader und Erde. Hierbei übernimmt der Meßverstärker die Funktionen Ablesen der Spannungen von den a/b-Adern und Anpassung der Spannung an den Eingangsbereich des A/D-Umsetzers. Durch analoges Subtrahieren der Spannung an der b-Ader von der Spannung an der a-Ader wird die Spannung zwischen a- und b-Ader ermittelt. Über einen Multiplexer und einen 12 Bit A/D-Umsetzer werden die Spannungen vom Mikrokontroller abgelesen.

Das Entladen der Telefonkapazität erfolgt durch die Widerstände R1 und R2. Die Entladedauer wird durch Differenzierung der Meßwerte bestimmt.

Die Spannungen $U_{ab}$, $U_{aE}$ und $U_{bE}$ können daher wie oben beschrieben gemessen werden. Zur Bestimmung von Gleich-, Wechsel- und Spitzenspannungsanteil wird bei einer Abtastfrequenz von 333 Hz das Maximum $U_{max}$ und Minimum $U_{min}$ der zu messenden Spannung ermittelt. Aus diesen Werten lassen sich die einzelnen Spannungen wie folgt berechnen:

Gleichspannung: $U_{DC} = (U_{max} + U_{min}) / 2$

Wechselspannung: $U_{AC} = (U_{max} - U_{min}) / (2 * 2^{1/2})$

Spitzenspannung: $U_{SP} = |U_{max}|$ bei $|U_{max}| > |U_{min}|$  $U_{SP} = |U_{min}|$ bei $|U_{min}| > |U_{max}|$

Die Toleranz der Meßschaltung ist begrenzt auf +/- 5% durch die Wahl geeigneter Bauteile.

FIG 3, FIG 4 und FIG 5 zeigen die Konfigurationen der Schaltungsanordnung zur Durchführunng der Leitungs-Widerstandsermittlung.

Zur Ermittlung der Leitungswiderstände $R_{aE}$, $R_{bE}$ und $R_{ab}$ wird über einen 71.5 kOhm Widerstand Batteriespannung $U_B$ an die a-Ader geschaltet und die Spannung $U_{aE}$ gemessen. Aus dem Spannungsverhältnis $U_{aE}/U_B$ kann der Widerstand berechnet werden. Die Bestimmung von $R_{bE}$ erfolgt durch Kreuzen der a/b-Adern. Meßtoleranzen, die durch den Betrag von $U_B$, den Meßverstärker sowie den A/D-Umsetzer entstehen, werden durch die Messung von $U_B$

2

bei abgeschalteten a/b-Adern ausgeglichen.

FIG 3 zeigt die Konfiguration der Schaltungsanordnung zur Ermittlung Von $R_{aE}$. Der Widerstand wird mithilfe der gemessenen Spannung $U_{aE}$ wie folgt berechnet:

$$R_{aE} = \frac{R_1 R_i U_{aE}}{R_i U_B - (R_i + R_1) U_{aE}}$$

FIG 4 zeigt die Konfiguration der Schaltungsanordnung zur Ermittlung von $R_{bE}$.

Der Widerstand $R_{bE}$ wird mithilfe der gemessenen Spannung $U_{aE}$ wie folgt berechnet:

$$R_{bE} = \frac{R_1 R_i U_{aE}}{R_i U_B - (R_i + R_1) U_{aE}}$$

FIG 5 zeigt die Konfiguration der Schaltungsanordnung zur Ermittlung von $R_{ab}$.

Der Widerstand wird mit Hilfe der gemessenen Spannungen $U_{aE}$ und $U_{bE}$ wie folgt berechnet:

$$R_{ab} = \frac{R_1 (U_{aE} - U_{bE})}{U_B - U_{aE}(1 + R_1/R_i)}$$

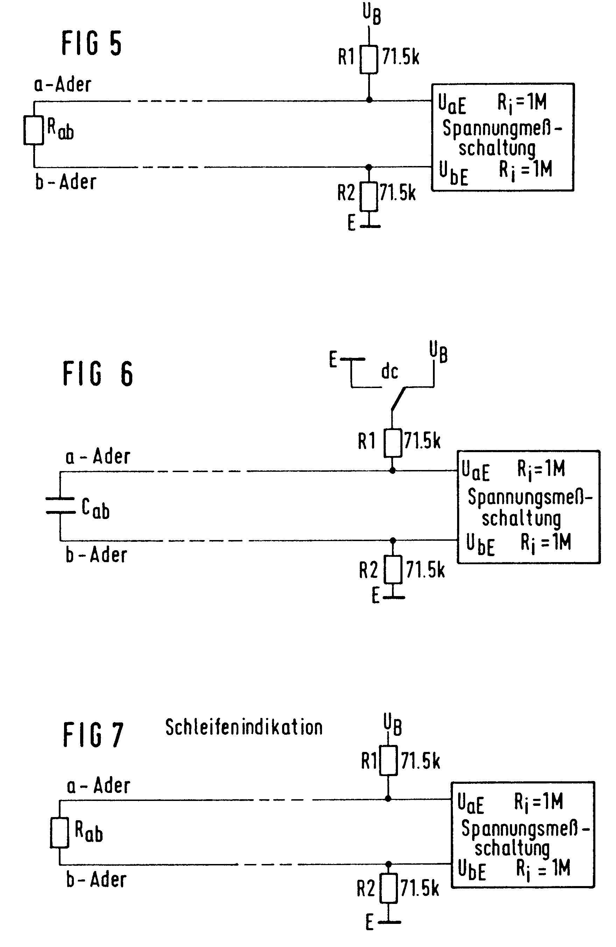

FIG 6 zeigt die Konfiguration der Schaltungsanordnung zur Ermittlung der Kapazität $C_{ab}$ zwischen den a/b-Adern. Die Kapazität $C_{ab}$ zwischen den a/b-Adern der Teilnehmerleitung bei offener Schleife, die im folgenden auch als Telefonkapazität bezeichnet wird, wird durch Messen der Zeitkonstanten ermittelt, die sich aus $C_{ab}$ und den Entladewiderständen ergibt. Dazu wird die Kapazität über die Widerstände R1 und R2 geladen und anschließend über den gleichen Stromkreis wieder entladen. Während der Entladung werden in einem definierten Zeitabstand "Delta t" zwei Spannungen $U_0$ und $U_1$ gemessen und daraus die Kapazität bestimmt. Die Kapazitäten $C_{aE}$ und $C_{bE}$ brauchen aufgrund der kurzen Leitungen (<300m) nicht berücksichtigt werden.

Die Kapazität wird wie folgt berechnet:

$$C_{ab} = \frac{Delta\ t}{(\frac{R1*R_i}{R1+R_i} + \frac{R2*R_i}{R2+R_i}) (\ln U_{ab0} / U_{ab1})}$$

Durch die Verwendung des Quotienten $U_{ab0} / U_{ab1}$ der beiden Meßwerte $U_{ab0}$, $U_{ab1}$ bei der Berechnung der Kapazität kürzen sich die Toleranzen des Meßverstärkers und des A/D-Umsetzers heraus. Die genannten Toleranzen haben deshalb keinen Einfluß auf den ermittelten Kapazitätswert.

Die Berechnung des Logarithmus ln erfolgt über eine, im Speicher des Mikrokontrollers implementierte Logarithmentabelle.

Im Entladekreis vorhandene Halbleiterbauteile, wie sie im Rufkreis moderner Endgeräte verwendet werden, verfälschen das Meßergebnis nicht.

Einflüsse von Fremdwechselspannungen werden durch geeignete Festlegung der Zeit Delta t (ganzzahliges Vielfach der Perioden_länge) weitgehendst eliminiert.

FIG 6 zeigt die Konfiguration der Schaltungsanordnung zur Ermittlung der Schleifenindikation.

Für die Schleifenindikation wird die Spannung $U_{ab}$ ermittelt und mit einem Schwellwert verglichen.

Schleifenschluß ist, wenn $U_{ab}$ < Schweliwert Schleifenunterbrechung ist, wenn $U_{ab}$ > Schwellwert

**Patentansprüche**

1. Schaltungsanordnung zum Prüfen von Teilnehmerleitungen, mit

a) einem Relais (KR) mit zugehörigen Schaltern (kr) zum Umschalten der Widerstandsmessung von a-Ader gegen Erde nach b-Ader gegen Erde,
b) einem Relais (DT) mit zugehörigem Schalter (dt) zum Abschalten der zweiten Ader bei Widerstandsmessung einer Ader gegen Erde,
c) einem Relais (DC) mit zugehörigem Schalter (dc) zum Umschalten von Laden auf Entladen der Kapazität bei der Kapazitätsmessung,
d) Meßwiderständen (R1, R2), die die Teilnehmerleitung von Erde und Batteriespannung trennen,
e) einer Spannungsmeßschaltung zum Messen der Teilnehmerleitung-Spannungen,

f) einem Mikrocontroller zum Steuern der Spannungsmeßschaltung und der genannten Relais,
**dadurch gekennzeichnet,**
daß

g) die genannte Spannungsmeßschaltung die Spannungsmeßwerte sowohl für die Kapazitätsmessung als auch für die Isolationswiderstandsmessung aufnimmt,
h) der Microcontroller (MC) aus den genannten Spannungsmeßwerten sowohl die Kapazität als auch die Widerstände ermittelt.

2. Verfahren zum Prüfen von Teilnehmerleitungen demgemäß der Widerstand der Teilnehmerleitung von a-Ader gegen Erde und b-Ader gegen Erde mithilfe von Spannungsmessungen ermittelt wird, die Kapazität der Teilnehmerleitung zwischen a-Ader und b-Ader mithilfe von Spannungsmessungen ermittelt wird,
**dadurch gekennzeichnet,**
daß die Spannungsmeßwerte für die Kapazitätsermittlung und die Widerstandsermittlung von derselben Spannungsmeßschaltung aufgenommen werden.

3. Verfahren zum Ermitteln der Kapazität der Teilnehmerleitung bei offener Schleife, demgemäß

a) $C_{ab}$ zunächst über einen Stromkreis mit bekanntem Meßwiderstand (R1, R2) geladen wird,
b) $C_{ab}$ dann über denselben Stromkreis entladen wird, während des Entladevorgangs in einem definierten Zeitabstand (Delta t) mithilfe einer Spannungsmeßschaltung zweimal die Spannung zwischen a/b-Ader der Teilnehmerleitung gemessen wird,
c) mithilfe der zwei gemessenen Spannungen ($U_{ab0}$, $U_{ab1}$) über die Gleichung

$$C_{ab} = \frac{\text{Delta t}}{\left(\dfrac{R1 \cdot R_i}{R1 + R_i} + \dfrac{R2 \cdot R_i}{R2 + R_i}\right)(\ln U_{ab0} / U_{ab1})}$$

die $C_{ab}$ ermittelt wird, in der ein Innenwiderstand ($R_i$) der Spannungsmeßschaltung mitenthalten ist.

4. Schaltungsanordnung nach Anspruch 1,
**dadurch gekennzeichnet,**
daß

a) die Schaltungsanordnung einen automatischen Abgleich der Spannungsmeßwerte durchführt, indem sie die im Ruhezustand auftretenden Offsetspannungen mißt und diese Werte von den im Meßzustand gemessenen Spannungsmeßwerten subtrahiert,
b) die Schaltungsanordnung den für die Ermittlung der Widerstandswerte benötigten Wert der $U_B$ durch Messung bei abgeschaltetetn a/b-Adern erhält.

FIG 1

Prüfling

Meßschaltung

Telefon

Teilnehmerleitung

a - Ader

b - Ader

$U_B$

dc

E

R1 71.5k

kr

kr

dt

R2 71.5k

E

$U_{aE}$
Spannungs-
Meßschaltung
$U_{bE}$

Mikro-
Kontroller

KR   DT   DC

+ 5V

EP 0 762 713 A1

**FIG 2**

**FIG 3**

**FIG 4** Meßprinzip zur Prüfung von $R_{bE}$

**FIG 5**

a-Ader

$R_{ab}$

b-Ader

$U_B$

R1 71.5k

$U_{aE}$    $R_i = 1M$
Spannungmeßschaltung
$U_{bE}$    $R_i = 1M$

R2 71.5k
E

**FIG 6**

a-Ader

$C_{ab}$

b-Ader

E  dc  $U_B$

R1 71.5k

$U_{aE}$    $R_i = 1M$
Spannungsmeßschaltung
$U_{bE}$    $R_i = 1M$

R2 71.5k
E

**FIG 7**   Schleifenindikation

a-Ader

$R_{ab}$

b-Ader

$U_B$

R1 71.5k

$U_{aE}$    $R_i = 1M$
Spannungsmeßschaltung
$U_{bE}$    $R_i = 1M$

R2 71.5k
E

## EUROPÄISCHER RECHERCHENBERICHT

Europäisches Patentamt

Nummer der Anmeldung

EP 95 11 4062

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 303 142 (SIEMENS)<br>* Spalte 4, Zeile 32 - Zeile 58 *<br>--- | 1-3 | H04M3/30<br>G01R27/26<br>G01R27/20 |
| X | DE-A-41 25 883 (SIEMENS)<br>* das ganze Dokument *<br>--- | 1-3 | |
| A | US-A-4 186 282 (ELLSON)<br>--- | | |
| A | GLOBECOM- IEEE GLOBAL TELECOMMUNICATIONS CONFERENCE,<br>Bd. 3, 6. - 9.Dezember 1992 ORLANDO(US),<br>Seiten 1667-1670, XP 000390465<br>HIROHUMI MASUKAWA ET AL 'FAST AND HIGHLY PRECISE MEASURING METHOD FOR SUBSCRIBER LINES'<br>--- | | |
| X | US-A-5 384 544 (FLUGSTAD ET AL)<br>* Zusammenfassung *<br>* Spalte 3, Zeile 64 - Spalte 4, Zeile 30 *<br>--- | 3 | |
| A | WO-A-89 06366 (ROBERT BOSCH)<br>--- | 3 | RECHERCHIERTE SACHGEBIETE (Int.Cl.6)<br><br>H04M<br>G01R |
| A | EP-A-0 580 947 (SIEMENS)<br>--- | | |
| A | MESSEN PRUFEN AUTOMATISIEREN INTERNATIONALES FACHJOURNAL FUR MESS-, STEUER- UND REGELTECHNIK,<br>Nr. 1, Januar 1989 BAD WORISHOFEN DE,<br>Seiten 48-53, XP 000079631<br>W.MINKINA ET AL 'METHODE DER DYNAMISCHEN ZUSTANDE ZUR KAPAZITATSMESSUNG UNTER VERWENDUNG EINES MIKRORECHNERS'<br>--- | 3 | |
| A | US-A-5 294 889 (HEEP ET AL)<br>----- | 3 | |

Der vorliegende Recherchenbericht wurde für alle Patentansprüche erstellt

| Recherchenort | Abschlußdatum der Recherche | Prüfer |
|---|---|---|
| DEN HAAG | 20.Februar 1996 | Vandevenne, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
                                              
& : Mitglied der gleichen Patentfamilie, übereinstimmendes Dokument

EPO FORM 1503 03.82 (P04C03)